# FASCICULE DE BREVET EUROPEEN

(11) **EP 0 518 770 B1**
(45) Date de publication et mention de la délivrance du brevet: **19.07.1995**
(21) Numéro de dépôt: 92401622.3
(22) Date de dépôt: 12.06.1992
(51) Int. Cl.: A23G 3/00

(54) **Bonbon sucre cuit sans sucre et son procédé de fabrication**
Zuckerbonbon gekocht ohne Zucker und Herstellungsverfahren
Sugarless boiled-sweet and process for making the same

(30) Priorité: 14.06.1991 FR 9107330
(43) Date de publication de la demande: 16.12.1992
(73) Titulaire: Roquette Frères, F-62136 Lestrem (FR)
(72) Inventeur: Mentink, Léon, F-59940 Estaires (FR); Serpelloni, Michel, F-62660 Beuvry-les-Bethune (FR)
(74) Mandataire: Boulinguiez, Didier

(56) Documents cités:
- EP-A- 0 094 292
- GB-A- 2 079 129
- US-A- 4 517 205
- CHEMICAL PATENTS INDEX, BASIC ABSTRACTS JOURNAL Derwent Publications Ltd.,London, GB; AN 91-127441

## Description

La présente invention a pour objet un bonbon "sucre cuit" sans sucre et un procédé permettant de fabriquer ce bonbon.

L'expression "sucre cuit" désigne, dans le domaine de la confiserie, les bonbons durs et amorphes qui sont bien connus du consommateur et qui se présentent avec une consistance cassante et un aspect vitreux.

Les bonbons "sucre cuit" conventionnels sont traditionnellement amorphes et constitués par un mélange de saccharose et de sirop de glucose, déshydraté par cuisson éventuellement sous vide. Dans le cas des bonbons du type "sucre cuit" sans sucre et toujours conventionnellement, le mélange de saccharose et de sirop de glucose a été remplacé par des sirops de sorbitol contenant éventuellement du mannitol et, plus récemment, par des hydrolysats d'amidon hydrogénés.

Les bonbons fabriqués à l'aide de sirops de sorbitol contenant éventuellement du mannitol sont des produits cristallisés qui présentent deux inconvénients majeurs, à savoir :
- le long laps de temps nécessaire pour obtenir une cristallisation du sorbitol et pour atteindre le durcissement complet, ce qui gêne la marche en continu des installations de fabrication,
- les phénomènes de cristallisation dus à la forte proportion de sorbitol des sirops en question.

De plus, en raison de la fluidité de la masse cuite, la fabrication de ces bonbons impose d'avoir recours à un procédé par coulée en moules, à chaud (120°C environ), de la masse de "sucre cuit" sans sucre alors que, dans le cas des bonbons "sucre cuit" classiques, on peut également procéder par découpage à partir d'un boudin dont le sucre cuit constitutif est refroidi à environ 70°C-80°C.

Pour améliorer la qualité de ces bonbons, les fabricants de bonbons "sucre cuit" sans sucre ont proposé d'ajouter de la gomme arabique aux mélanges de sorbitol-mannitol, la gomme arabique ayant pour rôle de retarder ou d'inhiber la recristallisation du sorbitol.

L'utilisation, pour la fabrication des bonbons "sucre cuit" sans sucre, d'hydrolysats d'amidon hydrogénés à la place des sirops de sorbitol a permis d'abandonner le recours à la gomme arabique, les bonbons ainsi fabriqués ne présentant pas de phénomènes de cristallisation et ne nécessitant que des durées de durcissement notablement réduites.

De plus, la fabrication des bonbons "sucre cuit" sans sucre obtenus à l'aide de ces hydrolysats s'apparente étroitement à celle des bonbons "sucre cuit" classiques, rendant ainsi possibles tant le formage par coulée dans des moules que le formage par découpage d'un boudin.

Les premiers hydrolysats d'amidon hydrogénés qui avaient été proposés dans la pratique étaient ceux obtenus à partir d'hydrolysats d'amidon d'un dextrose-équivalent (DE) de 30 à 40.

Les bonbons obtenus à partir de ces hydrolysats présentent effectivement un état amorphe total, sont insensibles à la cristallisation sans qu'il soit nécessaire d'avoir recours à des additions de gomme arabique et conservent donc toujours un aspect vitreux.

Ces hydrolysats ne sont toutefois pas dépourvus d'inconvénients. En effet, d'une part, ils sont peu sucrants, nécessitant donc le recours à des édulcorants artificiels tels que les saccharinates ou les cyclamates ou l'aspartame et, d'autre part, font preuve d'un caractère cariogène non négligeable.

Le premier de ces inconvénients a pu être éliminé par le recours à des hydrolysats d'amidon hydrogénés obtenus à partir d'hydrolysats d'amidon d'un DE plus élevé, compris entre 42 à 60.

Le deuxième a été plus récemment éliminé grâce à l'utilisation d'hydrolysats d'amidon hydrogénés comportant de plus une proportion inférieure à 3 %, de préférence inférieure à 1,5 %, de polyols de degré de polymérisation (ou DP) supérieur à 20.

Les bonbons "sucre cuit" sans sucre à base de ces hydrolysats d'amidon hydrogénés ne présentent donc plus les inconvénients des bonbons "sucre cuit" sans sucre à base d'hydrolysats antérieurs.

D'autres inconvénients s'attachent toutefois à l'utilisation d'hydrolysats d'amidon hydrogénés obtenus par hydrogénation d'hydrolysats d'amidon présentant un DE de 42 à 60.

Le premier de ces inconvénients réside en un phénomène d'écoulement ou de fluage ("cold flow") dont la matière constitutive du bonbon est le siège, ce phénomène, qui est assez lent à 20°C mais qui s'accélère avec l'élévation de température, se traduisant à la longue par une déformation des bonbons, préjudiciable à leur commercialisation.

Le second inconvénient réside dans le caractère hygroscopique non négligeable de ces bonbons, dû au fait que les produits de confiserie à base de ces hydrolysats d'amidon hydrogénés doivent être amenés à une teneur en eau inférieure à 2 %, de préférence inférieure à environ 1 %, ce qui entraîne une tendance à la reprise d'eau au stockage.

Le phénomène de fluage peut être fortement atténué en abaissant la teneur en humidité résiduelle du bonbon à une valeur inférieure à environ 1 %, mais cet abaissement est très difficile à réaliser au stade industriel et entraîne de toute façon une aggravation très sensible du caractère hygroscopique du bonbon, celui-ci présentant de ce fait une plus forte tendance à coller au papier d'emballage.

Aucune des solutions mentionnées n'a permis de remédier simultanément aux deux inconvénients mentionnés plus haut, alors que, jusqu'à présent, l'atténuation de l'un se traduisait par l'amplification de l'autre, le technicien ayant donc été réduit jusqu'à présent à se satisfaire d'un compromis entre les deux.

Il a été alors proposé dans un procédé décrit dans le brevet européen n° 94 292, au nom de la Société demanderesse, d'atténuer conjointement les deux inconvénients en question par incorporation à l'hydrolysat d'amidon hydrogéné constitutif du bonbon "sucre cuit" sans sucre d'une quantité efficace de gomme arabique ou de carboxyméthylcellulose ou CMC.

Il est préconisé dans ce brevet d'incorporer dans certains cas du mannitol à l'hydrolysat d'amidon hydrogéné constitutif du bonbon "sucre cuit" sans sucre, de manière à diminuer encore la tendance du bonbon fini à la reprise d'eau, donc sa propension à être collant.

Cependant, s'il est vrai que cette composition de bonbon au sucre cuit à base d'hydrolysat d'amidon hydrogéné (HAH) et de CMC et/ou de gomme arabique et éventuellement de mannitol, a donné satisfaction sur le plan de la reprise en eau, du fluage et des propriétés gustatives et organoleptiques, il n'en demeure pas moins qu'elle reste encore perfectible notamment en ce qui concerne l'optimisation du procédé de fabrication. Il serait en particulier intéressant de diminuer encore les températures et les durées de cuisson et par suite la consommation en énergie. De plus, l'emploi de produits comme la gomme arabique ou la CMC, à caractère visqueux en solution, peut parfois rendre difficile, d'une part, l'application du vide en raison d'une tendance au moussage, et, d'autre part, la déshydratation de la masse cuite.

Dans le cadre de l'évolution de cette technologie des bonbons "sucre cuit" aux polyols, il a été proposé d'utiliser des sirops d'HAH à forte teneur en maltitol, éventuellement additionnés de maltitol poudre. Dans ce type de bonbon, il se produit une cristallisation du maltitol qui, dans un premier temps, freine la reprise en eau. Par contre, dans un deuxième temps, le bonbon reprend de l'eau et évolue rapidement vers un aspect terne et opaque qui ne correspond pas aux normes requises pour un "sucre cuit". Ce phénomène appelé grainage peut également être réduit par l'utilisation de gomme arabique et/ou de CMC.

Cet inconvénient que constitue la reprise en eau est, comme on l'a vu ci-dessus, lié à la teneur en eau finale du bonbon mais également au caractère hygroscopique des constituants. Or, de manière générale, les polyols, dont notamment les HAH, en particulier du fait du sorbitol et de maltitol qui entrent dans leur composition, le xylitol, les polymères de condensation du glucose, sont connus comme présentant ce caractère hygroscopique.

La demande de brevet japonais n° 63-160.553 du 24/12/86 décrit un procédé de préparation de confiseries au sorbitol consistant à remplir des moules de formage avec une masse fondue de sorbitol, issue de la fusion de sorbitol ou d'une solution de sorbitol, puis à en napper la surface avec un mélange de sucre et de sirop de glucose cuit à 150°C. Les ouvertures des moules de formage sont ensuite obturées à l'aide d'un film plastique scellé. Il s'agit ici d'une confiserie cariogène qui comporte des sucres en plus du sorbitol et qui nécessite d'être conditionnée dans des "blisters" operculés, imperméables à l'eau. Les problèmes de stabilité à l'eau sont, dans ce cas, résolus par des moyens de conditionnement onéreux. Enfin, on ne peut pas considérer que ces bonbons sont constitués uniquement de sucre cuit amorphe car, on l'a vu ci-avant, le sorbitol passe nécessairement à l'état cristallisé graineux en durcissant.

On connaît également des bonbons à base de sirop d'HAH et d'isomalt ou PALATINIT - marque déposée par la Société Süddeutsche Zucker GmbH. L'isomalt est un mélange équimoléculaire de glucosido-1.6-mannitol et d'isomaltitol, obtenu par hydrogénation d'isomaltulose issu d'une transformation enzymatique du saccharose.

Ces bonbons HAH/isomalt ont été décrits notamment par le Leatherhead Food R.A. dans son rapport n° 652, page 11, de juin 1989 (auteurs : GA Hammond et J.B. Hudson). Les concentrations relatives HAH/isomalt mises en oeuvre sont de 1,07/1 (52/48). L'association de ces deux produits a, certes, permis d'améliorer légèrement les conditions de fabrication, et de limiter la reprise en eau des bonbons obtenus, notamment du fait du caractère faiblement hygroscopique de l'isomalt, mais a entraîné une augmentation importante du prix de revient du bonbon et une perte très sensible en pouvoir sucrant.

L'isomalt est en effet un produit onéreux, et de ce fait, convient mal comme agent de charge de produits fabriqués en grandes quantités. Par ailleurs, son faible pouvoir édulcorant nécessite le recours à des édulcorants intenses tels que l'aspartame, connus pour se dégrader à la chaleur en des produits de saveur amère et désagréable.

Considérant que pour résoudre ces problèmes de stabilité à la chaleur et de reprise en eau, il était peut-être judicieux de ne pas s'intéresser uniquement à la nature des constituants essentiels des bonbons "sucre cuit" aux polyols, la demanderesse a travaillé sur un bonbon "sucre cuit" aux polyols ayant une structure multicouches.

Une telle structure est bien connue dans de nombreux domaines de la confiserie et pourtant il n'existe à ce jour aucune publication relative à son application aux bonbons aux polyols constitués exclusivement de "sucre cuit".

On connaît par exemple un bonbon comportant, à hauteur de 5 à 50 % en poids, un centre liquide du type fondant ou liqueur, enrobé d'une enveloppe "sucre cuit" constituée de saccharose (45 à 70 %) et de sirop de glucose (30 à 50 %) représentant 50 à 95 % en poids du bonbon (cf. brevet US n° 4.517.205).

La demande de brevet GB-A-2 079 129 décrit un produit comestible tel qu'un chewing-gum, des sucreries ou des médicaments revêtu d'un enrobage cristallin comprenant un composé normalement hygroscopique tel que le sorbitol, le mannitol ou un HAH. Il concerne également un procédé de préparation de ce revêtement par application d'un sirop de polyol(s) puis d'une poudre de talcage à base de polyol(s).

La demande de brevet japonais n° 52-21.585 décrit quant à elle un procédé de préparation de bonbon sans sucre comprenant un noyau comportant, par exemple, du fructose, du sorbitol et du maltitol, et une enveloppe externe à base d'un oligosaccharide hydrogéné, de sorbitol et de mannitol.

Dans les deux demandes qui viennent d'être citées, il ne s'agit pas de "sucres cuits" au sens strict du terme, mais de produits au moins partiellement cristallisés.

Cette technologie appliquée dans le domaine des bonbons aux polyols pose des problèmes tout à fait particuliers auxquels il n'est pas possible de trouver de solutions en s'inspirant de la technologie des bonbons traditionnels. Ceci s'explique notamment par le fait que les HAH utilisés en particulier pour leur aptitude à apporter une viscosité adaptée ainsi que pour leurs pouvoirs anticristallisant et sucrant, sont en général hygroscopiques.

C'est à l'issue d'un très grand nombre d'essais, que la Société Demanderesse est parvenue à mettre au point un bonbon "sucre cuit" sans sucre présentant un compromis avantageux, sur le plan de la fabrication et des propriétés fonctionnelles et organoleptiques, entre des caractéristiques de structure, à savoir une organisation multicouches dans laquelle la couche externe représente moins de 35 % en poids du produit fini, et des caractéristiques relatives à la nature des constituants de cette couche externe. Conformément à l'invention, celle-ci comprend en effet un premier composant A hygroscopique choisi parmi les produits suivants: les hydrolysats d'amidon hydrogénés, le xylitol, les polymères de saccharides hypocaloriques ou leurs mélanges, à une concentration comprise entre 5 et 92 % en poids sur sec, et un deuxième composant B non hygroscopique, à une concentration comprise entre 8 et 95 % en poids sur sec, ce composant ayant une solubilité dans l'eau inférieure à 60 g pour 100 g d'eau à une température de 20°C et une hygroscopicité sous forme cristallisée telle que ce composant ne reprenne que moins de 3 % de son poids en eau dans une atmosphère dont l'humidité relative est inférieure ou égale à 85 %, à une température de 20°C.

Il s'ensuit que le bonbon "sucre cuit" sans sucre conforme à l'invention est caractérisé par le fait qu'il possède une structure multicouches dans laquelle la couche externe représente au plus 35 %, de préférence au plus 20 % du bonbon, et par le fait que ladite couche externe est constituée d'au moins deux composants A et B, le composant A étant présent à raison de 5 à 92 % en poids sur sec et étant choisi parmi les produits suivants : les hydrolysats d'amidon hydrogénés, le xylitol, les polymères de saccharides hypocaloriques, ou leurs mélanges, et le composant B étant présent à raison de 8 à 95 % en poids sur sec et ayant une solubilité dans l'eau inférieure à 60 g pour 100 g d'eau à 20°C et une hygroscopicité sous forme cristallisée telle qu'il ne reprenne que moins de 3 % de son poids dans une atmosphère dont l'humidité relative est inférieure ou égale à 85 %, à 20°C.

Le composant B faiblement soluble est ainsi un produit qui cristallise facilement sous une forme très peu hygroscopique, si l'on en juge par sa faible propension à reprendre de l'eau à des humidités relatives (HR) inférieures ou égales à 85 %.

De préférence, le composant B, beaucoup moins hygroscopique que le composant A, est choisi parmi les produits suivants : isomaltulose hydrogéné ou isomalt, isomaltulose, mannitol, érythritol.

Au sens de la présente invention le terme "hydrolysat d'amidon hydrogéné" désigne tout produit ou tout mélange de produits issus de l'hydrolyse d'un amidon de toute nature, par voie chimique ou enzymatique, transformé ensuite en polyols par hydrogénation.

Il peut s'agir, par exemple, soit de sorbitol, de maltitol, de maltotriitol et de leur mélange, soit d'un mélange de mono-, oligo- et polysaccharides hydrogénés tels que le produit commercialisé par la Demanderesse sous la marque LYCASIN.

Conformément à l'invention, les polymères de saccharides hypocaloriques peuvent être choisis parmi les polymères de glucose ou de fructose, les gommes et les fibres végétales non assimilables par l'organisme.

S'agissant des polymères de glucose, on peut citer le polymère de condensation du glucose, mis au point et commercialisé par la Société Pfizer, sous la marque LITESSE.

En ce qui concerne le fructose, les fructooligosaccharides (néosucres), dont notamment le produit commercialisé sous la marque ACTILIGHT par la Société Beghin Say, conviennent pour la fabrication des bonbons conformes à l'invention.

L'isomaltulose est un disaccharide du type glucosido 1-6 fructose commercialisé sous la marque déposée PALATINOSE par la Société Suddeutsche Zucker GmbH.

Le mannitol peut par exemple être celui commercialisé par la Société Demanderesse.

De nombreux avantages s'attachent au bonbon conforme à l'invention. Il faut tout d'abord souligner le fait que son prix de revient est tout à fait modéré, étant donné que le composant B non hygroscopique qui est le plus onéreux, n'est présent qu'à une concentration limitée par rapport au poids du bonbon.

En ce qui concerne la technologie de fabrication, il est à noter que l'addition du composé A au composé B, pour la composition externe, permet d'empêcher la cristallisation du composé B au cours de la fabrication, notamment au moment de la cuisson, et d'éviter un grainage des bonbons au cours du stockage.

Par ailleurs, le bonbon obtenu possède une très bonne stabilité thermique, à tout le moins équivalente à celle des bonbons HAH / isomalt de l'art antérieur. La température à laquelle apparaît le phénomène de fluage (ou cold flow) sur les bonbons conformes à l'invention est nettement plus élevée que celle de bonbons de structure monobloc homogène.

De plus, leur température de formage, c'est-à-dire la température à laquelle la masse cuite de bonbon peut être mise en forme sans problème de trop faible viscosité, est généralement supérieure à celle des bonbons de structure monobloc homogène. Cet avantage peut avoir des répercussions pratiques intéressantes, dont notamment des gains de temps de fabrication importants.

S'agissant de leur comportement vis-à-vis de l'eau, on constate que ces bonbons sont très peu hygroscopiques. Leurs caractéristiques originales ont permis d'atteindre, sans contraintes drastiques de fabrication, des teneurs en eau résiduelles supérieures à 1 % en poids, notamment comprises entre 1 et 3 % en poids, ce qui limite encore les coûts de fabrication.

L'invention permet également, contrairement à l'art antérieur, d'introduire à des taux importants des substances jugées jusqu'alors trop hygroscopiques pour être utilisées en fabrication de "sucres cuits" et qui pourtant sont douées de propriétés avantageuses. C'est le cas par exemple du xylitol qui possède un pouvoir sucrant élevé ainsi que des vertus anti-caries.

Forts de cet avantage, les bonbons n'ont pas tendance à devenir collants au stockage. Il n'est donc pas nécessaire de prévoir des emballages parfaitement imperméables à l'eau, d'où une économie sur leur prix de revient.

Ces bonbons "sucre cuit" présentent une saveur sucrée tout à fait satisfaisante, ne nécessitant pas forcément l'emploi d'édulcorants intenses. Leurs qualités gustatives et organoleptiques sont excellentes.

Conformément à un mode avantageux de mise en oeuvre de l'invention, le composant A est un hydrolysat d'amidon hydrogéné comprenant de préférence plus de 30 % en poids sur sec de molécules ayant un degré de polymérisation ou DP égal à 2.

Parmi les sirops d'HAH utilisables dans le cadre de l'invention, on peut citer ceux préparés à partir d'hydrolysats d'amidon ayant un DE de 42 à 60, de préférence de 45 à 55, et présentant par ailleurs, les teneurs étant exprimées par rapport à la matière sèche de l'hydrolysat,
- une teneur en sorbitol de 0,1 à 19 %, de préférence de 0,2 à 17 %,
- une teneur en maltitol de 35 à 90 %,
le complément à 100 étant constitué par des polyols de degré de polymérisation supérieur à 2.

Il est ainsi avantageux de recourir :
- à des HAH comprenant, par rapport à leur matière sèche :
   * de 2 à 10 % en poids de molécules de DP égal à 1,
   * de 70 à 90 % en poids de molécules de DP égal à 2,
   * de 7 à 24 % en poids de molécules de DP supérieur à 2.
- ou bien à des HAH comprenant par rapport à leur matière sèche :
   * de 1 à 17 % en poids de molécules de DP égal à 1,
   * de 35 à 75 % en poids de molécules de DP égal à 2,
   * de 10 à 30 % en poids de molécules de DP allant de 3 à 6,
   * de 5 à 25 % en poids de molécules de DP allant de 7 à 20,
le complément à 100 étant constitué par des polysaccharides hydrogénés de DP > 20.

Ces deux derniers types de sirops présentent l'avantage notable d'être non cariogènes.

Suivant une variante de réalisation du bonbon conforme à l'invention, la couche externe du bonbon comprend :
- le composant A dans une concentration comprise entre 10 et 30 %, de préférence entre 15 et 25 % en poids sur sec,
- et le composant B dans une concentration comprise entre 70 et 90 %, de préférence entre 75 % et 85 % en poids sur sec.

Suivant un autre mode de réalisation avantageux de l'invention, les bonbons "sucre cuit" sans sucre conformes à l'invention sont constitués d'un centre et d'une couche externe représentant respectivement 70 à 95 % en poids et 5 à 30 % en poids du bonbon.

Le centre est de préférence constitué d'un hydrolysat d'amidon hydrogéné, par exemple de même type que ceux pouvant être choisis à titre de composant A pour la couche externe, ou de xylitol, de polymères de saccharides hypocaloriques, ou d'un mélange d'entre eux.

Le bonbon "sucre cuit" suivant l'invention peut être avantageusement additionné d'arômes et/ou de colorants et/ou d'édulcorants intenses tels que l'aspartame.

La présente invention concerne également un procédé de préparation de bonbon "sucre cuit" à structure multicouches dans laquelle la couche externe représente au plus 35 % en poids du bonbon et est constituée d'au moins deux composants A et B, le composant A étant présent à raison de 5 à 92 % en poids sur sec et étant choisi parmi la liste de produits suivants : hydrolysats d'amidon hydrogénés, xylitol, polymères de saccharides hypocaloriques ou leurs mélanges, le composant B étant présent à raison de 8 à 95 % en poids sur sec et ayant une solubilité dans l'eau inférieure à 60 g pour 100 g d'eau à 20°C et une hygroscopicité sous forme cristallisée telle qu'il ne reprenne que moins de 3 % de son poids en eau dans une atmosphère dont l'humidité relative est inférieure ou égale à 85 % à 20°C.

Ce procédé consiste essentiellement :
- à réaliser séparément des mélanges comprenant chacun le ou les constituants d'une des couches du bonbon, éventuellement additionnés d'eau, dont notamment le mélange du composant A et du composant B de la couche externe, dans des quantités choisies de telle sorte que leurs proportions dans la couche externe du bonbon soient respectivement de 5 à 92 % en poids sur sec et de 8 à 95 % en poids sur sec,
- à cuire séparément chacun des mélanges à des températures supérieures à 120°C, sous vide, de telle façon que le bonbon présente une consistance dure et cassante et un aspect vitreux à température ambiante,
- éventuellement à aromatiser et/ou à colorer,
- et enfin à mettre en forme le bonbon, de façon à obtenir une structure multicouches.

Suivant un mode préférentiel de mise en oeuvre du procédé suivant l'invention, la cuisson des différentes couches du bonbon s'effectue à environ 155°C sous un vide minimum de - 0,6 bar jusqu'à ce que la teneur en humidité du mélange soit amenée à une valeur inférieure à environ 3 % en poids, notamment de 3 à 1 % en poids.

On a donc recours à au moins deux cuissons séparées. Il peut s'agir par exemple d'une cuisson en continu pour le centre du bonbon et d'une cuisson en discontinu pour la (ou les) couches(s) supérieure(s).

La mise en forme du bonbon multicouches suivant l'invention s'effectue par formage du coeur du bonbon, et par enrobage dudit centre avec la ou les couches du bonbon.

Conformément à une première technique de mise en forme et dans le cas d'une structure bicouche, la masse cuite du bonbon destinée à former le centre est amenée à une température de formage comprise entre 60 et 90°C. Elle est travaillée manuellement pour donner un boudin cylindrique autour duquel on enroule la masse cuite de la couche supérieure, préalablement mise sous forme de film à une température de formage comprise entre 60 et 90°C.

Pour des raisons pratiques évidentes, le bonbon ne sera, en général, formé que d'un centre et d'une couche externe.

Une deuxième technique de mise en forme peut être le formage à l'aide de dispositifs largement utilisés dans ce domaine, comme par exemple les dispositifs de roulage composés de quatre rouleaux tronconiques rotatifs fonctionnant de telle sorte que soit ménagé entre eux un espace interstitiel de forme générale tronconique, dans lequel la masse cuite du centre du bonbon est mise en continu sous forme de boudin tronconique autour duquel s'enroule la masse cuite de la couche externe introduite dans le dispositif en aval de l'endroit prévu pour la masse cuite du coeur, qui est en général introduite en tête de la boudineuse.

Pour mettre en oeuvre cette deuxième technique, on peut également employer des dispositifs de coextrusion équipés, de même que les dispositifs de roulage ci-dessus, d'un système d'alimentation décalée pour les différentes masses cuites formant le centre et la (ou les) couche(s) successives du bonbon.

Une autre technique utilisable pour la mise en forme du bonbon est le coulage en plusieurs fois des masses cuites dans des moules à des températures supérieures à 90°C.

Après mise en forme, éventuellement découpage et refroidissement des masses cuites, les bonbons obtenus sont conditionnés sans qu'il soit nécessaire de recourir à des emballages imperméables à l'eau du fait de l'existence de la couche externe peu hygroscopique.

On décrit ci-après, dans le cadre des exemples, les essais de fabrication de bonbons conformes à l'invention réalisés par la demanderesse, qui permettent d'illustrer les produits et le procédé concernés par la présente invention et d'en faire ressortir leurs différents avantages.

Ils ont été effectués selon la méthodologie et dans les conditions suivantes :
- mélange séparé des constituants du centre et des composants A et B de la couche externe, avec adjonction éventuelle d'eau,
- cuisson des constituants du centre dans un premier cuiseur de marque OTTO HANSEL Sucroliner fonctionnant sur un mode continu avec une température de cuisson de 140°C sous un vide de - 0,9 bar,
- cuisson des composants A et B dans un second cuiseur de marque BOSCH fonctionnant sur un mode discontinu, la cuisson s'effectuant à une température de l'ordre de 155°C sous un vide de - 0,7 bar pendant 5 minutes,
- aromatisation et coloration,
- refroidissement des masses cuites du centre sur tapis roulant et de la couche externe sur table froide jusqu'à leur température de formage, environ 80°C,
- mise en forme des masses cuites refroidies consistant, en fait, à acheminer en continu la masse cuite du centre dans un dispositif de roulage, ou boudineuse, de marque UNIPLAST de Bosch, tandis que la masse cuite de la couche externe est introduite dans la partie supérieure de la boudineuse à un endroit distant de la tête du dispositif, de manière à obtenir, en sortie du dispositif, un boudin bicouche,
- découpage dudit boudin en bonbons,
- passage des bonbons obtenus au travers d'une chaîne de refroidissement.

### EXEMPLE I

### Composition de départ

Pour le centre : sirop d'hydrolysat d'amidon hydrogéné commercialisé sous la marque déposée LYCASIN 80/55, limpide, incolore, de saveur sucrée et non cariogène, dont la teneur en matières sèches est de 75 % en poids et dont le spectre glucidique est le suivant :

| | |
|---|---|
| - D-Sorbitol | 7,7 % |
| - disaccharides hydrogénés | 53,0 % |
| - tri- à hexasaccharides hydrogénés | 24,9 % |
| - saccharides hydrogénés DP7 à DP20 | 13,5 % |
| - saccharides hydrogénés DP > 20 | 0,9 % (3 % max.) |

### Pour la couche externe :

- composant A = sirop de maltitol LYCASIN défini ci-dessus,
- composant B = produit commercialisé sous la marque PALATINIT, sous forme pulvérulente,
- eau.

Les proportions A/B / eau de la couche externe sont respectivement de 1/4,5/1.

### Caractéristiques finales

Les bonbons "sucre cuit" obtenus conformément à la méthodologie décrite ci-dessus présentent une couche externe formant environ 20 % en poids du bonbon et enveloppent un centre formant les 80 % en poids environ restants. La couche externe comprend :
- 85 % en poids sur sec de PALATINIT,
- et 15 % en poids sur sec de LYCASIN.

Les bonbons contiennent finalement environ :
- 82 % en poids de LYCASIN,
- 16 % en poids de PALATINIT,
- 2 % en poids d'eau.

Ces bonbons présentent une bonne stabilité à l'humidité, c'est-à-dire qu'ils ont une faible tendance à reprendre de l'eau au stockage, et une stabilité thermique élevée puisqu'aucun fluage ne s'observe à une température inférieure à 40°C. Notons également qu'ils ont une saveur sucrée tout à fait satisfaisante sans apport d'édulcorants intenses, et qu'ils ne sont pas cariogènes.

Ces bonbons ne nécessitent pas d'être papillotés individuellement et peuvent être commercialisés en étui carton.

Tous ces avantages ont été obtenus sans difficultés particulières de fabrication et sans conséquences négatives quant au prix de revient. Mieux encore, ce dernier a été réduit d'un tiers par rapport à celui de bonbons "sucre cuit" sans sucre de structure homogène connus avec LYCASIN et PALATINIT.

### EXEMPLE II

### Composition de départ

Les ingrédients utilisés sont les suivants :
Pour le centre : sirop de maltitol commercialisé sous la marque déposée MALTISORB 75/75 par la Société Demaderesse, limpide, incolore, non cariogène, de saveur sucrée proche de celle du saccharose, dont la teneur en matières sèches est de 75,7 % en poids et dont le spectre glucidique est (en % sur sec) :

| | |
|---|---|
| - D-Sorbitol | 5,1 % |
| - disaccharides hydrogénés | 77,4 % |
| - saccharides hydrogénés de DP > 2 | 18,5 % |

### Pour la couche externe :

- composant A = sirop de MALTISORB défini ci-dessus,
- composant B = PALATINIT sous forme pulvérulente,
- eau.

Les proportions A/B / eau de la couche externe sont respectivement de 1/4,5/1.

### Caractéristiques finales

Les bonbons "sucre cuit" obtenus conformément à la méthodologie décrite ci-dessus présentent une couche externe formant environ 20 % en poids du bonbon et enveloppant un centre formant les 80 % en poids environ restants. La couche externe comprend :
- 85 % en poids sur sec de PALATINIT
- et 15 % en poids sur sec de MALTISORB.

Les bonbons contiennent finalement environ :
- 82 % en poids de MALTISORB
- 16 % en poids de PALATINIT
- 2 % en poids d'eau

Ces bonbons présentent les mêmes avantages que ceux obtenus dans l'exemple I, avec un pouvoir sucrant encore plus élevé.

### EXEMPLE III

### Composition de départ

Les ingrédients utilisés sont les suivants :
- pour le centre : sirop LYCASIN utilisé dans l'exemple I,
- pour la couche externe :
   . composant A = sirop LYCASIN,
   . composant B = mannitol poudre commercialisé par la Société Demanderesse,
   . gomme arabique.

Les proportions A/B / gomme arabique de la couche externe sont respectivement de 80/18/2.

### Caractéristiques finales

Les bonbons "sucre cuit" obtenus conformément à la méthodologie décrite ci-dessus présentent une couche externe formant environ 25 % en poids du bonbon et enveloppant un centre formant les 75 % en poids environ restants. La couche externe comprend sur sec :
- 80 % en poids sur sec de LYCASIN,
- 18 % en poids sur sec de mannitol,
- 2 % en poids sur sec de gomme arabique.

Les bonbons contiennent finalement environ :
- 93,0 % en poids de LYCASIN
- 4,5 % en poids de mannitol
- 0,5 % de gomme arabique
- 2 % d'eau.

La mise en oeuvre conjointe de LYCASIN, de mannitol et de gomme arabique dans la couche externe, confère au bonbon une très faible hygroscopicité prévenant ainsi la reprise en eau, de même qu'une bonne stabilité thermique lui donnant une excellente résistance au fluage (cold flow). Globalement, ceci conduit à une amélioration notable de la stabilité et de la conservation au stockage des bonbons suivant l'invention.

## Revendications

1. Bonbon "sucre cuit" sans sucre, qui possède une structure multicouches dans laquelle la couche externe représente au plus 35 %, de préférence au plus 25 % en poids du bonbon et dans lequel ladite couche externe est constituée d'au moins deux composants A et B, le composant A étant présent à raison de 5 à 92 % en poids sur sec et étant choisi parmi les produits suivants : hydrolysats d'amidon hydrogénés, xylitol, polymères de saccharides hypocaloriques, ou leurs mélanges, et le composant B étant présent à raison de 8 à 95 % en poids sur sec et ayant une solubilité dans l'eau inférieure à 60 g pour 100 g d'eau à une température de 20°C et une hygroscopicité sous forme cristallisée telle qu'il ne reprenne que moins de 3 % de son poids dans une atmosphère dont l'humidité relative est inférieure ou égale à 85 %, à une température de 20°C.

2. Bonbon "sucre cuit" selon la revendication 1, caractérisé en ce que le composant B est choisi parmi les produits suivants : isomaltulose hydrogéné ou isomalt, isomaltulose, mannitol, érythritol.

3. Bonbon "sucre cuit" selon les revendications 1 ou 2, caractérisé en ce que la concentration en composant B dans le bonbon est inférieure ou égale à 35 % en poids par rapport au poids total du bonbon.

4. Bonbon "sucre cuit" selon l'une quelconque des revendications 1 à 3, caractérisé en ce que le composant A est un hydrolysat d'amidon hydrogéné comprenant plus de 30 % en poids sur sec de molécules ayant un degré de polymérisation égal à 2.

5. Bonbon "sucre cuit" selon la revendication 4, caractérisé en ce que l'hydrolysat d'amidon hydrogéné présente, les teneurs étant exprimées par rapport à la matière sèche de l'hydrolysat :
- une teneur en sorbitol de 0,1 à 19 %, de préférence de 0,2 à 17 %,
- et une teneur en maltitol de 35 à 90 %,
le complément à 100 étant constitué par des polyols de DP supérieur à 2.

6. Bonbon "sucre cuit" selon la revendication 5, caractérisé en ce que l'hydrolysat d'amidon hydrogéné comprend, par rapport à sa matière sèche
- de 1 à 17 % en poids de molécules de DP égal à 1,
- de 35 à 75 % en poids de molécules de DP égal à 2,
- de 10 à 30 % en poids de molécules de DP allant de 3 à 6,
- de 5 à 25 % en poids de molécules de DP allant de 7 à 2O.
le complément à 100 étant constitué par des polysaccharides hydrogénés de DP > 20.

7. Bonbon "sucre cuit" selon l'une quelconque des revendications 1 à 6, caractérisé en ce que la couche externe du bonbon comprend :
- le composant A dans une concentration comprise entre 10 et 30 %, de préférence entre 15 à 25 % en poids sur sec,
- le composant B dans une concentration comprise entre 70 et 90 %, de préférence entre 75 % et 85 % en poids sur sec.

8. Bonbon "sucre cuit" selon l'une quelconque des revendications 1 à 7, caractérisé en ce qu'il est constitué d'un centre et d'une couche externe représentant respectivement de 70 à 95 % en poids et de 5 à 30 % en poids du bonbon.

9. Bonbon "sucre cuit" selon la revendication 8, caractérisé en ce que le centre du bonbon est constitué par un hydrolysat d'amidon hydrogéné, du xylitol, un polymère de saccharides hypocalorique, ou leur mélange.

10. Procédé de préparation de bonbon "sucre cuit" à structure multicouches dans laquelle la couche externe représente au plus 35 % en poids du bonbon et est constituée d'au moins deux composants A et B, le composant A étant présent à raison de 5 à 92 % en poids sur sec et étant choisi parmi les produits suivants : hydrolysats d'amidon hydrogénés, xylitol, polymères de saccharides hypocaloriques ou leurs mélanges, le composant B étant présent à raison de 8 à 95 % en poids sur sec et ayant une solubilité dans l'eau inférieure à 60 g pour 100 g d'eau à une température de 20°C et une hygroscopicité sous forme cristallisée telle qu'il ne reprenne que moins de 3 % de son poids en eau dans une atmosphère dont l'humidité relative est inférieure ou égale à 85 %, à une température de 20°C, ce procédé étant caractérisé en ce qu'il consiste :
- à réaliser séparément des mélanges comprenant chacun le (ou les) constituant(s) d'une couche du bonbon, éventuellement additionnés d'eau, dont notamment le mélange du composant A et du composant B de la couche externe dans des quantités choisies de telle sorte que leurs proportions dans la couche externe du bonbon soient respectivement de 5 à 92 % en poids sur sec, et de 8 à 95 % en poids sur sec,
- à cuire séparément chacun des mélanges à des températures supérieures à 120°C, sous vide, de telle façon que le bonbon présente une consistance dure et cassante et un aspect vitreux à température ambiante,
- et enfin à mettre en forme le bonbon, de façon à obtenir une structure multicouches.

## Claims

1. A sugar-free "hard candy", which has a multilayer structure in which the external layer represents at most 35%, preferably at most 25% by weight of the candy and wherein said external layer consists of at least two components A and B, component A being present in a proportion of 5 to 92% by dry weight and being chosen from the following products: hydrogenated starch hydrolysates, xylitol, polymers of low-calorie saccharides or mixtures thereof, and component B being present in a proportion of 8 to 95% by dry weight and having a solubility in water of less than 60 g per 100 g of water at a temperature of 20°C and a hygroscopicity in the crystalline form such that it can only reabsorb less than 3% of its weight in an atmosphere whose relative humidity is less than or equal to 85%, at a temperature of 20°C.

2. The "hard candy" as claimed in claim 1, wherein component B is chosen from the following products: hydrogenated isomaltulose or isomalt, isomaltulose, mannitol or erythritol.

3. The "hard candy" as claimed in claims 1 or 2, wherein the concentration of component B in the candy is less than or equal to 35% by weight in relation to the total weight of the candy.

4. The "hard candy" according to any one of claims 1 to 3, wherein component A is a hydrogenated starch hydrolysate which comprises more than 30% by dry weight of molecules which have a degree of polymerization equal to 2.

5. The "hard candy" as claimed in claim 4, wherein the hydrogenated starch hydrolysate has, the contents being expressed in relation to the dry matter of the hydrolysate:
- a sorbitol content of 0.1 to 19%, preferably from 0.2 to 17%,
- and a maltitol content of 35 to 90%,
the complement to 100 consisting of polyols with a DP greater than 2.

6. The "hard candy" as claimed in claim 5, wherein the hydrogenated starch hydrolysate comprises, in relation to its dry matter
- from 1 to 17% by weight of molecules with a DP equal to 1,
- from 35 to 75% by weight of molecules with a DP equal to 2,
- from 10 to 30% by weight of molecules with a DP ranging from 3 to 6,
- from 5 to 25% by weight of molecules with a DP ranging from 7 to 20,
the complement to 100 consisting of hydrogenated polysaccharides with a DP > 20.

7. The "hard candy" according to any one of claims 1 to 6, wherein the external layer of the candy comprises:
- component A in a concentration of between 10 and 30%, preferably between 15 and 25% by dry weight,
- component B in a concentration of between 70 and 90%, preferably between 75% and 85% by dry weight.

8. The "hard candy" according to any one of claims 1 to 7, characterized in that it consists of a center and of an external layer which represent respectively from 70 to 95% by weight and from 5 to 30% by weight of the candy.

9. The "hard candy" as claimed in claim 8, wherein the center of the candy consists of a hydrogenated starch hydrolysate, xylitol, a polymer of low-calorie saccharides or a mixture thereof.

10. A process for preparing "hard candy" with a multilayer structure in which the external layer represents at most 35% by weight of the candy and consists of at least two components A and B, component A being present in a proportion of 5 to 92% by dry weight and being chosen from the following products: hydrogenated starch hydrolysates, xylitol, polymers of low-calorie saccharides or mixtures thereof, component B being present in a proportion of 8 to 95% by dry weight and having a solubility in water of less than 60 g per 100 g of water at a temperature of 20°C and a hygroscopicity in the crystalline form such that it can only resorb less than 3% of its weight of water in an atmosphere whose relative humidity is less than or equal to 85%, at a temperature of 20°C, this process consisting essentially:
- in preparing separately mixtures which each comprise the constituent(s) of a layer of the candy, optionally with addition of water, including in particular the mixture of component A and component B of the external layer in quantities chosen such that their proportions in the external layer of the candy should be respectively from 5 to 92% by dry weight and from 8 to 95% by dry weight,
- in separately cooking each of the mixtures at temperatures higher than 120°C, under vacuum, such that the candy exhibits a hard and brittle consistency and a glassy appearance at room temperature,
- and finally in shaping the candy, so as to obtain a multilayer structure.

## Patentansprüche

1. Gekochtes Bonbon ohne Zucker, welches eine vielschichtige Struktur besitzt, worin die äußere Schicht höchstens 35 %,
vorzugsweise höchstens 25 Gewichtsprozent des Bonbons ausmacht und worin diese äußere Schicht aus mindestens zwei Komponenten A und B besteht, wobei der Bestandteil A mit einem Anteil von 5 bis 92 Gewichtsprozent auf die Trockensubstanz vorliegt und ausgewählt ist unter den folgenden Produkten: hydrierte Stärkehydrolysate, Xylit, Polymere von Sacchariden mit vermindertem Kaloriengehalt oder deren Gemischen, und der Bestandteil B in einem Anteil von 8 bis 95 Gewichtsprozent bezogen auf die Trockenmasse vorliegt, und eine Löslichkeit in Wasser unter 60g pro 100g Wasser bei einer Temperatur von 20°C hat, und eine solche Hygroskopizität in kristallisierter Form hat, daß nur weniger als 3 % seines Gewichts in einer Atmosphäre, deren relative Feuchtigkeit unter oder gleich 85% bei einer Temperatur von 20°C ist, aufgenommen werden.

2. Gekochtes Bonbon gemäß Anspruch 1, dadurch gekennzeichnet, daß der Bestandteil B ausgewählt ist unter den folgenden Produkten: hydrierte Isomaltulose oder Isomalt, Isomaltulose, Mannit, Erythrit.

3. Gekochtes Bonbon gemäß den Ansprüchen 1 oder 2, dadurch gekennzeichnet, daß die Konzentration an Bestandteil B in dem Bonbon unter oder gleich 35 Gewichtsprozent in bezug auf das Gesamtgewicht des Bonbons ist.

4. Gekochtes Bonbon gemäß einem der Ansprüche 1 bis 3, dadurch gekennzeichnet, daß der Bestandteil A ein hydriertes Stärkehydrolysat ist, das mehr als 30 Gewichtsprozent auf den Trockengehalt an Molekülen mit einem Polymerisationsgrad (DP) gleich 2 enthält.

5. Gekochtes Bonbon gemäß Anspruch 4, dadurch gekennzeichnet, daß das hydrierte Stärkehydrolysat Gehalte aufweist, welche in bezug auf die Trockensubstanz des Hydrolysats ausgedrückt sind:
- einen Gehalt an Sorbit von 0,1 bis 19%, vorzugsweise von 0,2 bis 17%
- und einen Gehalt an Maltit von 35 bis 90%, wobei die Ergänzung auf 100 aus Polyolen vom DP über 2 besteht.

6. Gekochtes Bonbon gemäß Anspruch 5, dadurch gekennzeichnet, daß das hydrierte Stärkehydrolysat in bezug auf die Trockensubstanz umfaßt:
- von 1 bis 17 Gewichtsprozent Moleküle vom DP gleich 1
- von 35 bis 75 Gewichtsprozent Moleküle vom DP gleich 2
- von 10 bis 30 Gewichtsprozent Moleküle vom DP von 3 bis 6,
- von 5 bis 25 Gewichtsprozent Moleküle vom DP von 7 bis 20,
wobei die Ergänzung auf 100 aus hydrierten Polysacchariden vom DP > 20 besteht.

7. Gekochtes Bonbon gemäß einem der Ansprüche 1 bis 6, dadurch gekennzeichnet, daß die äußere Schicht des Bonbons umfaßt:
- den Bestandteil A in einer Konzentration zwischen 10 und 30%, vorzugsweise zwischen 15 und 25 Gewichtsprozent bezogen auf Trockensubstanz,
- den Bestandteil B in einer Konzentration zwischen 70 und 90%, vorzugsweise zwischen 75 und 85 Gewichtsprozent bezogen auf Trockensubstanz.

8. Gekochtes Bonbon gemäß einem der Ansprüche 1 bis 7, dadurch gekennzeichnet, daß es aus einem Kern und einer äußeren Schicht besteht, welcher 70 bis 95 Gewichtsprozent bzw. welche 5 bis 30 Gewichtsprozent des Bonbons ausmacht.

9. Gekochtes Bonbon gemäß Anspruch 8, dadurch gekennzeichnet, daß der Kern des Bonbons aus einem hydrierten Stärkehydrolysat, Xylit, einem kalorienvermindertem Polymeren von Sacchariden oder deren Gemisch besteht.

10. Verfahren zur Herstellung des gekochten Bonbons mit mehrschichtiger Struktur, worin die äußere Schicht höchstens 35 Gewichtsprozent des Bonbons ausmacht und aus mindestens zwei Bestandteilen A und B besteht, wobei der Bestandteil A in einem Anteil von 5 bis 92 Gewichtsprozent bezogen auf Trockensubstanz vorhanden ist und unter folgenden Produkten ausgewählt ist: hydrierte Stärkehydrolysate, Xylit, kalorienverminderte Polymere von Sacchariden und deren Gemische, der Bestandteil B in einem Anteil von 8 bis 95 Gewichtsprozent bezogen auf Trockensubstanz vorliegt und eine Löslichkeit in Wasser unter 60g pro 100g Wasser bei einer Temperatur von 20°C aufweist, und eine solche Hygroskopizität in kristallisierter Form aufweist, daß nur weniger als 3% seines Gewichts an Wasser in einer Atmosphäre, deren relative Feuchtigkeit unter oder gleich 85% bei einer Temperatur von 20°C ist, aufgenommen werden, wobei dieses Verfahren dadurch gekennzeichnet ist, daß es darin besteht:
- getrennt Mischungen herzustellen, die jeweils den (oder die) Bestandteil(e) einer Schicht des Bonbons, gegebenenfalls versetzt mit Wasser umfassen, wobei das Gemisch der Komponente A und der Komponente B der äußeren Schicht in solchen Mengen ausgewählt ist, daß ihre Anteile in der äußeren Schicht des Bonbons von 5 bis 92 Gewichtsprozent bezogen auf Trockensubstanz bwz. 8 bis 95 Gewichtsprozent bezogen auf Trockensubstanz sind,
- jedes der Gemische bei Temperaturen über 120°C im Vakuum in solcher Weise zu kochen, daß das Bonbon eine harte und splittrige Konsistenz und ein glasartiges Aussehen bei Umgebungstemperatur aufweist,
- und schließlich das Bonbon in eine solche Form zu bringen, daß eine vielschichtige Struktur erhalten wird.
